# EUROPÄISCHE PATENTSCHRIFT

(11) **EP 1 666 281 B1**
(45) Veröffentlichungstag und Bekanntmachung des Hinweises auf die Patenterteilung: **10.06.2009**
(21) Anmeldenummer: 05025647.8
(22) Anmeldetag: 24.11.2005
(51) Int. Cl.: B60G 17/005, B60G 17/04, B60G 17/056

(54) **Hydropneumatische Fahrzeugradaufhängung**
Hydropneumatic suspension of a vehicle
Suspension hydropneumatique de véhicule

(30) Priorität: 04.12.2004 DE 102004058618
(43) Veröffentlichungstag der Anmeldung: 07.06.2006
(73) Patentinhaber: Carl Freudenberg KG, 69469 Weinheim (DE); Same Deutz-Fahr Deutschland GmbH, 89415 Lauingen (DE)
(72) Erfinder: Hommel, Rainer, 87616 Marktoberdorf (DE); Luxem, Andreas, 56333 Winningen (DE); Käsler, Richard, 53424 Remagen (DE)

(56) Entgegenhaltungen:
- DE-B3- 10 250 448
- DE-C1- 4 242 448
- US-A1- 2002 171 209

## Beschreibung

### Technisches Gebiet

Die Erfindung betrifft eine Anordnung zur Beeinflussung von Bewegungen eines Kraftfahrzeugs, umfassend mindestens einen Zylinder, welcher einen stangenseitigen Ringraum und einen flächenseitigen Zylinderraum aufweist, wobei der Ringraum und der Zylinderraum mit einem Fluid befüllbar sind, wobei der Zylinderraum und/ oder der Ringraum mit mindestens einem Speicher über mindestens eine Einrichtung strömungsverbindbar ist/ sind und wobei die Einrichtung mindestens ein signalgesteuertes Element zur Unterbrechung der Strömungsverbindung zwischen Zylinder und Speicher aufweist. Die Erfindung betrifft des Weiteren eine Einrichtung zur Verwendung in einer Anordnung zur Beeinflussung von Bewegungen eines Kraftfahrzeugs.

### Stand der Technik

Derartige Anordnungen und Einrichtungen sind allgemein bekannt. In den gattungsbildenden Anordnungen werden häufig Membranspeicher verwendet, welche ein Fluid aufnehmen und abgeben können. Dieses Fluid kann über Leitungsanordnungen zu diversen Zylindern fließen. Dabei sind die Zylinder in einen Zylinderraum und einen Ringraum unterteilt, welche beide mit Fluid befüllbar sind. Wird nun die Zylinderstange eingefahren, so wird Fluid über eine Leitung in einen mit dem Zylinderraum strömungsverbundenen Speicher gedrückt. Gleichzeitig kann Fluid aus dem Tank oder einem weiteren Speicher in den Ringraum nachfließen. Im umgekehrten Fall kann die im Speicher gespeicherte Energie die Zylinderstange ausfahren lassen. Die bekannten Anordnungen und Einrichtungen dienen insbesondere der Federung von Kraftfahrzeugen.

Aus der DE 102 50 448 B3 ist eine gattungsbildende Anordnung bekannt, bei der sich ein signalgesteuertes Element über ein Ventil ansteuern lässt. Die US 2002/0171209 A1 stellt auf Aufhängungseinrichtungen in Kraftfahrzeugen ab.

Die gattungsbildenden Anordnungen und Einrichtungen sind jedoch nicht geeignet, der Dynamik eines Kraftfahrzeuges ausreichend Rechnung zu tragen. Bei den gattungsbildenden Anordnungen ist insbesondere problematisch, dass Änderungen des Bewegungszustands eines Kraftfahrzeugs - insbesondere bei Bremsvorgängen - nur wenig kompensierbar sind. Kraftfahrzeuge neigen beim Bremsen zum Nicken. Dies führt zu einer erhöhten Beanspruchung der Vorderachse und einer ungünstigen Bremskraftverteilung.

### Darstellung der Erfindung

Der Erfindung liegt nunmehr die Aufgabe zu Grunde, eine Anordnung zu schaffen, die bei Einleitung einer Bewegungsänderung des Kraftfahrzeuges unmittelbar aktiviert wird.

Die vorliegende Erfindung löst die zuvor genannte Aufgabe durch die Merkmale des Patentanspruchs 1.

Erfindungsgemäß ist erkannt worden, dass die Bewegung einer Zylinderstange innerhalb des Kolbens durch Verschließen einer oder mehrerer Verbindungsleitungen zu Ausgleichelementen wie Speichern unterbunden werden kann. Dabei ist insbesondere erkannt worden, dass ein inkompressibles Fluid, welches in einem Zylinderraum eingeschlossen ist, dem Zylinder keine Möglichkeit gibt, sich zu bewegen. In so weit ist ein Einknicken eines Kraftfahrzeuges wirksam dadurch vermieden, dass die Zylinderstange innerhalb des Zylinders ruckartig festgelegt werden. Die ruckartige Festlegung erfolgt erfindungsgemäß durch eine besonders schnell ansprechende Signalsteuerung. Schließlich ist erkannt worden, dass durch Verhinderung des Einknickens eines Kraftfahrzeugs bei Bremsvorgängen die Belastung der Vorderachse reduziert und die Bremswirkung verbessert wird. Das signalgesteuerte Element ist durch eine Bremsleuchte ansteuerbar. Hierdurch ist sichergestellt, dass die Einrichtung aktiviert wird, sobald der Bremsvorgang eingeleitet wird.

Folglich ist die eingangs genannte Aufgabe gelöst.

In einer konstruktiv besonders günstigen Ausgestaltung könnte das signalgesteuerte Element als Steuerschieber ausgebildet sein. Dabei könnte ein Steuerschieber zur Anwendung kommen, welcher ein federbeaufschlagtes Bauteil aufweist, das durch Fluidbeaufschlagung einen Durchgang verschließen kann. Diese konkrete Ausgestaltung ist im Hinblick auf eine besonders zuverlässige und robuste mechanische Ausgestaltung der Anordnung vorteilhaft.

Der Steuerschieber könnte durch ein elektrisch betätigbares Magnetventil steuerbar sein. Die Vorkehrung eines solchen Magnetventils bewirkt ein rasches Ansprechen auf ein elektrisches Signal.

Eine Fluidbeaufschlagung könnte durch im Speicher gespeicherte Energie erfolgen. Innerhalb des Speichers, welcher als Membranspeicher ausgebildet sein könnte, ist Bewegungsenergie in Form von Druck gespeichert. Dieser Druck könnte auf ein Fluid umgelenkt werden, welches sodann ein Bauteil mit Druck beaufschlagen und dadurch bewegen kann. Diese Ausgestaltung erlaubt vorteilhaft, bereits gespeicherte Energie zu verwenden.

Ein zur Betätigung des Steuerschiebers verwendetes Fluid könnte über eine Bypassleitung förderbar sein. Die Vorkehrung einer Bypassleitung bewirkt, dass das im Speicher gespeicherte Fluid auf ein Bauteil umlenkbar ist.

Anstelle eines vorgesteuerten Steuerschiebers ist es auch denkbar, einen über einen Magneten direkt geschalteten Steuerschieber zu verwenden.

Anstelle eines über einen Magneten direkt geschlateten Steuerschiebers ist es auch denkbar, einen proportionalen Steuerschieber mit ausreichender Dynamik zu verwenden. Dies hat den Zweck, die Einrichtung zur aktiven Anpassung der Dämpfung an die Bewegungsdynamik des Fahrzeugs zu verwenden. Diese Anpassung kann den Komfort und die Fahrsicherheit positiv beeinflussen.

Die Einrichtung könnte eine Dämpfung umfassen, welche zwischen Zylinderraum und/ oder Ringraum und signalgesteuertem Element angeordnet ist. Die Dämpfung könnte so ausgebildet sein, dass sie unterschiedlich starke Dämpfungen für die Bewegungsrichtungen der Zylinder erlaubt. Als Ausbildung der Dämpfung ist eine Kombination aus Blenden und Rückschlagventilen denkbar. Mit einer solchen Dämpfung kann das Fahrverhalten des Fahrzeugs positiv beeinflusst werden.

Die Einrichtung könnte ein Druckbegrenzungsventil aufweisen, welches mit einem Tank strömungsverbunden ist. Die Vorkehrung eines Druckbegrenzungsventils erlaubt die Vermeidung von Schäden innerhalb der Einrichtung, insbesondere des Speichers, da das Druckbegrenzungsventil eine Verbindung zum Tank immer dann herstellt, wenn die Leitungen und Elemente innerhalb der Anordnung mit einem zu hohen Druck beaufschlagt werden.

Die Einrichtung könnte ein Ablassventil aufweisen, welches mit einem Tank strömungsverbunden ist. Die Vorkehrung eines Ablassventils ist bei Wartungsmaßnahmen an der Anordnung hilfreich, um unter Druck stehendes Fluid aus den Leitungen und dem Speicher zu entfernen.

Die Einrichtung könnte mit einer Niveauregeleinrichtung strömungsverbunden sein. Durch Niveauregeleinrichtungen kann die Federung eines Kraftfahrzeugs an unterschiedliche Lastbeaufschlagungen angepasst werden.
Der Ringraum und/ oder der Zylinderraum könnten durch eine einzige oder verschiedene Einrichtungen gleichen oder verschiedenen Aufbaus mit einem oder verschiedenen Speichern strömungsverbindbar sein. Durch diese konkreten Ausgestaltungen ist es denkbar, dass die Festlegung der Zylinderstange entweder über eine ringraumseitige oder eine zylinderraumseitige Einrichtung oder durch ein Zusammenwirken zweier Einrichtungen erfolgt. Hierdurch ist eine besonders zuverlässige Festlegung der Zylinderstange innerhalb des Zylinders realisierbar.

Des Weiteren ist die eingangs genannte Aufgabe im Hinblick auf eine Einrichtung zur Verwendung in einer Anordnung zur Beeinflussung von Bewegungen eines Kraftfahrzeugs mit den Merkmalen des Patentanspruchs 10 gelöst. Danach umfasst eine Einrichtung mindestens ein signalgesteuertes Element zur Unterbrechung einer Strömungsverbindung zwischen einem Zylinder und einem Speicher.

Um Wiederholungen zu vermeiden, sei in Bezug auf die erfinderische Tätigkeit auf die Ausführungen zur Anordnung als solcher verwiesen.

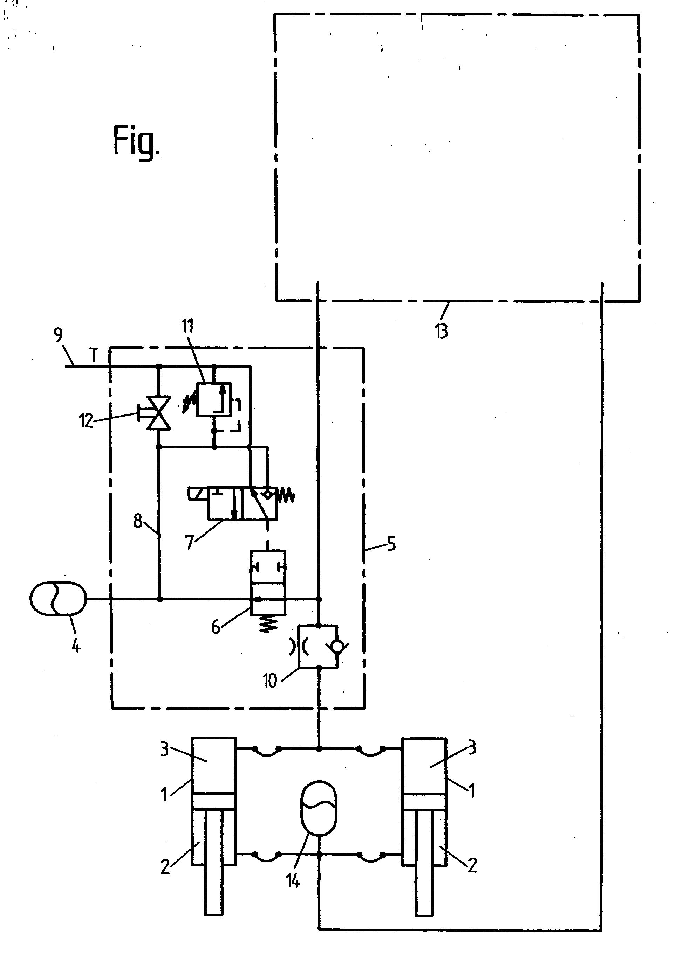

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels der erfindungsgemäßen Anordnung anhand der Zeichnung zu verweisen. In Verbindung mit der Erläuterung des bevorzugten Ausführungsbeispiels anhand der Zeichnung werden auch im Allgemeinen bevorzugte Ausgestaltungen und Weiterbildungen der Lehre erläutert.

### Kurzbeschreibung der Zeichnung

In der Zeichnung zeigt die einzige
- Fig.: in einer schematischen Ansicht die erfindungsgemäße Anordnung.

### Ausführung der Erfindung

Die einzige Fig. zeigt einen Zylinder 1, welcher einen stangenseitigen Ringraum 2 und einen flächenseitigen Zylinderraum 3 aufweist. Der Ringraum 2 und der Zylinderraum 3 sind mit einem Fluid befüllt. Der Zylinderraum 3 ist mit einem Speicher 4 über eine Einrichtung 5 strömungsverbunden. Die Einrichtung 5 weist mindestens ein signalgesteuertes Element 6 zur Unterbrechung der Strömungsverbindung zwischen Zylinder 1 und Speicher 4 auf.

Das signalgesteuerte Element 6 ist als Steuerschieber ausgebildet, welcher durch ein elektrisch betätigbares Magnetventil 7 ansteuerbar ist.

Das Magnetventil 7 betätigt den Steuerschieber 6 durch Fluidbeaufschlagung. Dabei erfolgt die Fluidbeaufschlagung durch im Speicher 4 gespeicherte Energie. Das verwendete Fluid ist über eine Bypassleitung 8 förderbar. Das Magnetventil 7 ist mit einem Tank 9 verbunden.

Die Einrichtung 5 umfasst eine Dämpfung 10, welche zwischen Zylinderraum 3 und signalgesteuertem Element 6 angeordnet ist. Diese umfasst in Parallelschaltung eine Blende und ein Rückschlagventil.

Die Einrichtung 5 umfasst ein Druckbegrenzungsventil 11, welches mit dem Tank 9 verbunden ist.

Die Einrichtung 5 umfasst des Weiteren ein Ablassventil 12, welches mit dem Tank 9 verbunden ist.

Die Einrichtung 5 ist mit einer Niveauregeleinrichtung 13 verbunden.

Der Ringraum 2 ist mit einem weiteren Speicher 14 und der Niveauregeleinheit 13 verbunden.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass das zuvor rein willkürlich gewählte Ausführungsbeispiel lediglich zur Erörterung der erfindungsgemäßen Lehre dient, diese jedoch nicht auf dieses Ausführungsbeispiel einschränkt.

## Patentansprüche

1. Anordnung zur Beeinflussung von Bewegungen eines Kraftfahrzeugs, umfassend mindestens einen Zylinder (1), welcher einen stangenseitigen Ringraum (2) und einen flächenseitigen Zylinderraum (3) aufweist, wobei der Ringraum (2) und der Zylinderraum (3) mit einem Fluid befüllbar sind, wobei der Zylinderraum (3) und/ oder der Ringraum (2) mit mindestens einem Speicher (4, 14) über mindestens eine Einrichtung (5) strömungsverbindbar ist/ sind und wobei die Einrichtung (5) mindestens ein signalgesteuertes Element (6) zur Unterbrechung der Strömungsverbindung zwischen Zylinder (1) und Speicher (4, 14) aufweist, **dadurch gekennzeichnet, dass** das signalgesteuerte Element (6) durch Aktivierung einer Bremsleuchte ansteuerbar ist.

2. Anordnung nach Anspruch 1, **dadurch gekennzeichnet, dass** das signalgesteuerte Element (6) als Steuerschieber ausgebildet ist.

3. Anordnung nach Anspruch 2, **dadurch gekennzeichnet, dass** der Steuerschieber (6) durch ein elektrisch betätigbares Magnetventil (7) steuerbar ist.

4. Anordnung nach Anspruch 2, **dadurch gekennzeichnet, dass** der Steuerschieber (6) als Magnetventil ausgebildet ist.

5. Anordnung nach einem der Ansprüche 1 bis 4, **dadurch gekennzeichnet, dass** die Einrichtung (5) eine Dämpfung (10) umfasst, welche zwischen Zylinderraum (3) und/ oder Ringraum (2) und signalgesteuertem Element (6) angeordnet ist.

6. Anordnung nach einem der Ansprüche 1 bis 5, **dadurch gekennzeichnet, dass** die Einrichtung (5) ein Druckbegrenzungsventil (11) aufweist, welches mit einem Tank (9) strömungsverbunden ist.

7. Anordnung nach einem der Ansprüche 1 bis 6, **dadurch gekennzeichnet, dass** die Einrichtung (5) ein Ablaufventil (12) aufweist, welches mit einem Tank (9) strömungsverbunden ist.

8. Anordnung nach einem der Ansprüche 1 bis 7, **dadurch gekennzeichnet, dass** die Einrichtung (5) mit einer Niveauregeleinrichtung (13) strömungsverbunden ist.

9. Anordnung nach einem der Ansprüche 1 bis 8, **dadurch gekennzeichnet, dass** der Ringraum (2) und der Zylinderraum (3) durch verschiedene Einrichtungen (5) mit verschiedenen Speichern (4, 14) strömungsverbindbar sind.

10. Einrichtung (5) zur Verwendung in einer Anordnung zur Beeinflussung von Bewegungen eines Kraftfahrzeugs, insbesondere nach einem der Ansprüche 1 bis 9, umfassend mindestens ein signalgesteuertes Element (6) zur Unterbrechung einer Strömungsverbindung zwischen einem Zylinder (1) und einem Speicher (4, 14).

## Claims

1. Arrangement for influencing movements of a motor vehicle, comprising at least one cylinder (1) which has a rod-side annular space (2) and a surface-side cylinder space (3), wherein the annular space (2) and the cylinder space (3) can be filled with a fluid, wherein the cylinder space (3) and/or the annular space (2) can be placed in a flow connection to at least one accumulator (4, 14) via at least one device (5),and wherein the device (5) has at least one signal-controlled element (6) for interrupting the flow connection between the cylinder (1) and the accumulator (4, 14), **characterized in that** the signal-controlled element (6) can be actuated by activating a brake light.

2. Arrangement according to Claim 1, **characterized in that** the signal-controlled element (6) is embodied as a control slide.

3. Arrangement according to Claim 2, **characterized in that** the control slide (6) can be controlled by means of a solenoid valve (7) which can be activated electrically.

4. Arrangement according to Claim 2, **characterized in that** the control slide (6) is embodied as a solenoid valve.

5. Arrangement according to one of Claims 1 to 4, **characterized in that** the device (5) comprises a damping means (10) which is arranged between the cylinder space (3) and/or annular space (2) and a signal-controlled element (6).

6. Arrangement according to one of Claims 1 to 5, **characterized in that** the device (5) has a pressure limiting valve (11) which has a flow connection to a tank (9).

7. Arrangement according to one of Claims 1 to 6, **characterized in that** the device (5) has a discharge valve (12) which has a flow connection to a tank (9).

8. Arrangement according to one of Claims 1 to 7, **characterized in that** the device (5) has a flow connection to a ride level control device (13).

9. Arrangement according to one of Claims 1 to 8, **characterized in that** the annular space (2) and the cylinder space (3) can be placed in a flow connection to various accumulators (4, 14) by means of various devices (5).

10. Device (5) for use in an arrangement for influencing movements of a motor vehicle, in particular according to one of Claims 1 to 9, comprising at least one signal-controlled element (6) for interrupting a flow connection between a cylinder (1) and an accumulator (4, 14).

## Revendications

1. Système pour agir sur les déplacements d'un véhicule automobile, comprenant au moins un vérin (1) qui présente une chambre annulaire (2) côté tige et une chambre cylindrique (3) côté plat, la chambre annulaire (2) et la chambre cylindrique (3) pouvant être remplies d'un fluide, la chambre cylindrique (3) et/ou la chambre annulaire (2) pouvant communiquer à écoulement avec au moins un réservoir (4, 14) par l'intermédiaire d'au moins un dispositif (5) et le dispositif (5) présentant au moins un élément (6) commandé par signal qui interrompt la liaison d'écoulement entre le vérin (1) et le réservoir (4, 14),
**caractérisé en ce que**
l'élément (6) commandé par signal peut être commandé par activation des feux de freinage.

2. Système selon la revendication 1, **caractérisé en ce que** l'élément (6) commandé par signal est configuré comme coulisseau pilote.

3. Système selon la revendication 2, **caractérisé en ce que** le coulisseau pilote (6) peut être commandé par l'intermédiaire d'une soupape magnétique (7) actionnée électriquement.

4. Système selon la revendication 2, **caractérisé en ce que** le coulisseau pilote (6) est configuré comme soupape magnétique.

5. Système selon l'une des revendications 1 à 4, **caractérisé en ce que** le dispositif (5) présente un amortissement (10) disposé entre la chambre cylindrique (3) et/ou la chambre annulaire (2) et l'élément (6) commandé par signal.

6. Système selon l'une des revendications 1 à 5, **caractérisé en ce que** le dispositif (5) présente une soupape (11) de limitation de pression qui est reliée à écoulement à une cuve (9).

7. Système selon l'une des revendications 1 à 6, **caractérisé en ce que** le dispositif (5) présente une soupape d'évacuation (12) qui est reliée à écoulement à une cuve (9).

8. Système selon l'une des revendications 1 à 7, **caractérisé en ce que** le dispositif (5) est relié à écoulement à un dispositif (13) de régulation du niveau.

9. Système selon l'une des revendications 1 à 8, **caractérisé en ce que** la chambre annulaire (2) et la chambre cylindrique (3) peuvent être reliées à écoulement à différents réservoirs (4, 14) par différents dispositifs (5).

10. Dispositif (5) destiné à être utilisé dans un système destiné à agir sur le déplacement d'un véhicule automobile, en particulier selon l'une des revendications 1 à 9, et comprenant au moins un élément (6) commandé par signal et destiné à interrompre la liaison d'écoulement entre un vérin (1) et un réservoir (4, 14).
